Europäisches Patentamt

European Patent Office

Office européen des brevets

(11) Veröffentlichungsnummer : **0 023 996**
**B1**

# (12) EUROPÄISCHE PATENTSCHRIFT

(45) Veröffentlichungstag der Patentschrift :
05.10.83

(21) Anmeldenummer : 80104379.5

(22) Anmeldetag : 25.07.80

(51) Int. Cl.³ : **B 27 B   5/06**

(54) **Plattensäge mit aufrechtem Gestell.**

(30) Priorität : 08.08.79 DE 2932103

(43) Veröffentlichungstag der Anmeldung :
18.02.81 Patentblatt 81/07

(45) Bekanntmachung des Hinweises auf die Patenterteilung : 05.10.83 Patentblatt 83/40

(84) Benannte Vertragsstaaten :
AT CH FR GB LI

(56) Entgegenhaltungen :
DE A 2 813 726
DE B 2 354 858
FR A 2 290 271

(73) Patentinhaber : REICH Spezialmaschinen GmbH
Postfach 1803 Plochinger Strasse 65
D-7440 Nürtingen (DE)

(72) Erfinder : Abt, Anton
Albstrasse 18
D-7446 Oberboihingen (DE)
Erfinder : Kneipel, Herbert
Knieblsstrasse 4
D-7440 Nürtingen-Neckarhausen (DE)

EP 0 023 996 B1

## Plattensäge mit aufrechtem Gestell

Die Erfindung betrifft eine Plattensäge mit aufrechtem Gestell gemäß dem Oberbegriff von Anspruch 1.

Eine solche Plattensäge ist bekannt aus der DE-A1-2 813 726. Dabei dient zur Verschiebung der Kreissäge in Richtung Auflagefläche, also zum Eintauchen des Sägeblattes in das zu zersägende Werkstück, sowie zum Austauchen der Kreissäge eine mit dem Werkzeugträger verbundene Zahnstange, die über ein Ritzel antreibbar ist. Zum Verschwenken der Kreissäge in eine senkrechte oder waagrechte Schnittstellung ist bei dieser bekannten Plattensäge ein Kreissegment vorgesehen, das mit der Zahnstange zusammenwirkt und beim Verschwenken die Verbindung zwischen Zahnstange und Werkzeugträger aufrechterhält.

Diese Anordnung zur Abstützung und Führung zwischen Zahnstange und Kreissegment ist konstruktiv teuer und aufwendig und im Hinblick auf Stabilität und Störanfälligkeit nicht befriedigend.

Aufgabe der vorliegenden Erfindung ist daher die Schaffung eines Verschiebeantriebs der eingangs genannten Art, der aus möglichst vielen handelsüblichen Teilen besteht und damit billig ist und der eine Verschiebung des Werkzeugträgers über das Ende der Austauchbewegung hinaus von Hand so ermöglicht, daß ein Verschwenken des Werkzeugträgers zusammen mit der Kreissäge möglich ist.

Diese Aufgabe wird erfindungsgemäß durch die im kennzeichnenden Teil des Anspruchs 1 angegebenen Merkmale gelöst.

Die erfindungsgemäße Anordnung ermöglicht einen einfachen Aufbau des Verschiebeantriebs mit handelsüblichen Teilen, wie z. B. einem Scheibenwischermotor und einer Zahnkette.

Dieses gewährleistet eine sichere Funktion der Verschiebeeinrichtung. Ist dabei die Gesamtlänge der Zahnkette größer als der Abstand ihrer Befestigungspunkte am Kettenträger, dann ist jeweils das letzte Kettenglied beweglich und die gewünschte Verschiebung des Werkzeugträgers von Hand ist auf einfache Weise möglich.

Im folgenden ist ein Ausführungsbeispiel der Erfindung unter Bezugnahme auf die Zeichnungen näher beschrieben.

Es zeigen :

Figur 1 Vorderansicht auf den oberen Bereich einer Plattensäge gemäß Erfindung, teilweise geschnitten.

Figur 2 und 3 Schnitt nach Linie II - II in Fig. 1.

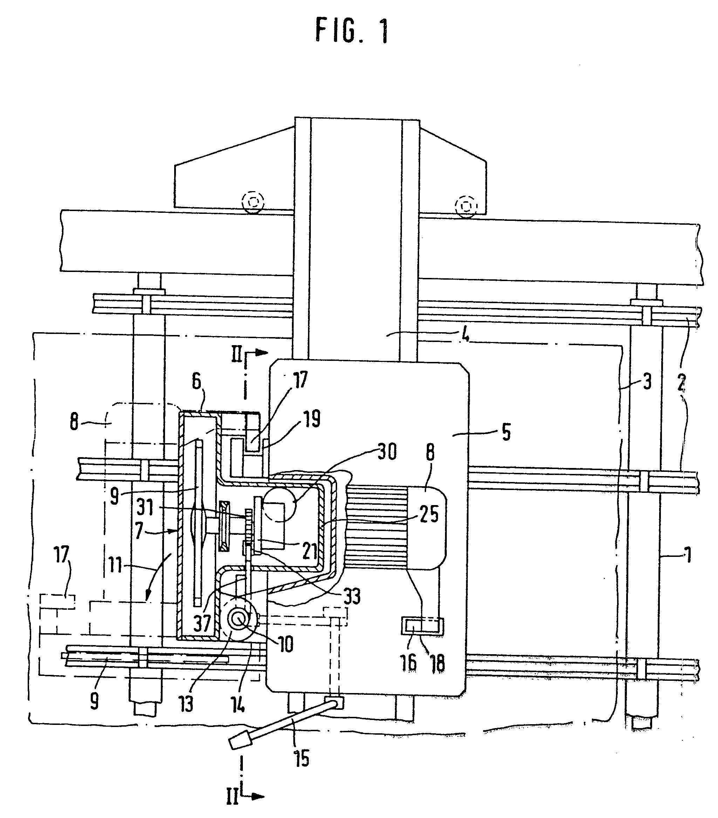

In fig. 1 ist in bekannter Weise das aufrechte Gestell 1 einer Plattensäge dargestellt, das eine Auflagefläche 2 für ein plattenförmiges Werkstück 3 bildet, und an dem ein Führungsbalken 4 waagrecht verschiebbar gelagert ist. Ein Schlitten 5 ist am Führungsbalken 4 in Höhenrichtung verschiebbar gelagert und stützt einen Werkzeugträger 6, der zusammen mit einer an diesem Werkzeugträger 6 gelagerten Kreissäge 7, bestehend aus Elektromotor 8 und über einen Keilriemen angetriebenes Sägeblatt 9, senkrecht zur Auflagefläche 2 verschiebbar ist. Dieser Werkzeugträger 6 läßt sich außerdem mit der Kreissäge 7 um die Achse des Führungsrohres 10 aus der in Fig. 1 ausgezogen gezeichneten senkrechten Schnittstellung in Richtung von Pfeil 11 in die in Fig. 1 strichpunktiert gezeichnete waagrechte Schnittstellung verschwenken.

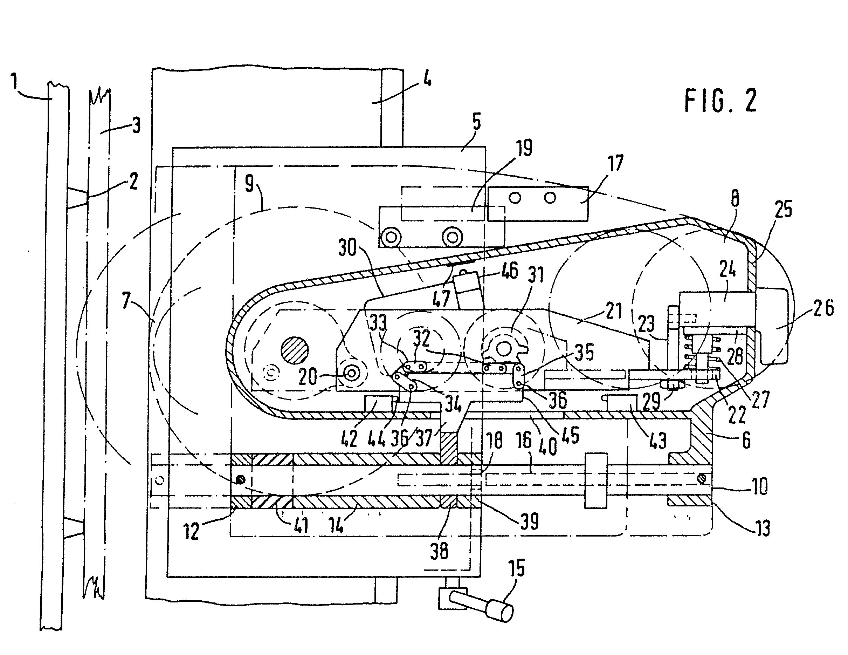

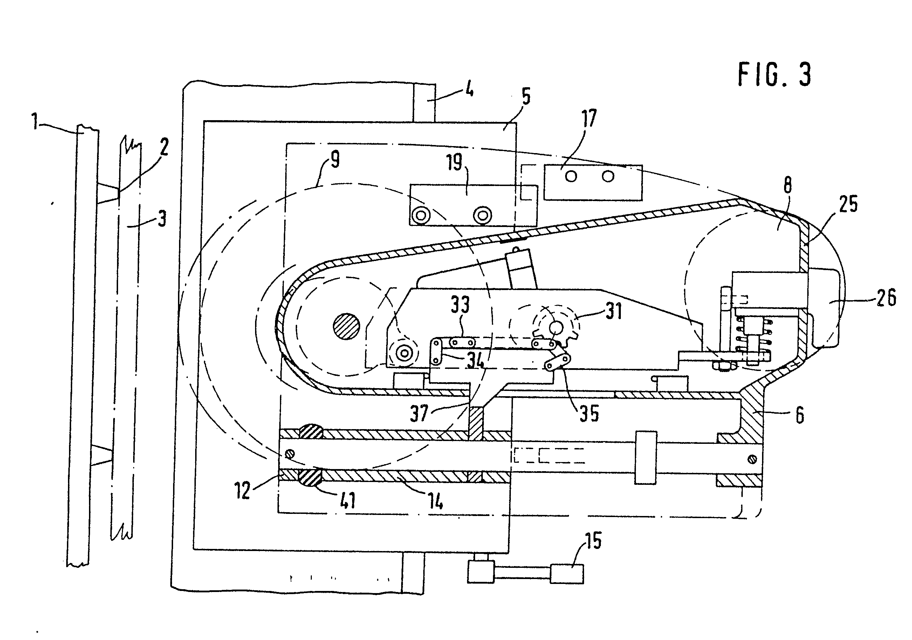

In den Fig. 2 und 3 sind weitere Einzelheiten des Werkzeugträgers 6 dargestellt, wobei sich dieser in Fig. 2 ausgezogen gezeichnet in seiner Ruhe-oder Austauch-Stellung und strichpunktiert gezeichnet in seiner Eintauch-Stellung befindet. Das Führungsrohr 10 ist an den Augen 12 und 13 des Werkzeugträgers 6 befestigt und in einer Konsole 14 von Schlitten 5 schwenkbar und verschiebbar gelagert.

Zum Verschieben des Werkzeugträgers 6 von Hand dient ein Schlitten 5 gelagerter Handhebel 15, der über hier nicht dargestellte Gelenkhebel in geeigneter Weise mit dem Führungsrohr 10 verbunden ist.

Mit dem Werkzeugträger 6 sind ferner Führungszungen 16 und 17 verbunden, die in der Ruhestellung und während des gesamten Eintauchvorgangs des Werkzeugträgers 6 in Führungsnuten 18 und 19 des Schlittens 5 eingreifen.

An einem am Werkzeugträger 6 befestigten Zapfen 20 ist eine Lagerplatte 21 schwenkbar gelagert und an ihrem freien Ende mit einer Nase 22 mit einem Gelenkzapfen 23 verbunden, der seinerseits exzentrisch an einem Exzenterzapfen 24 angelenkt ist. Exzenterzapfen 24 ist drehbar im Gehäuse 25 von Werkzeugträger 6 gelagert und mit einem Schaltergriff 26 versehen. Eine Druckfeder 27 stützt sich gegen einen Vorsprung 28 von Gehäuse 25 ab und drückt Nase 22 gegen eine Mutter 29, die in ein Gewinde von Gelenkzapfen 23 eingeschraubt ist.

An der Lagerplatte 21 ist ein Getriebemotor 30 befestigt, der zum Antrieb des Verschieberades 31 dient. Das Verschieberad 31 ist als Kettenrad ausgebildet, dessen Zähne in die Glieder 32 des als Zahnkette ausgebildeten Verschiebeelements 33 eingreifen. Die Endglieder 34 und 35 des Verschiebeelements 33 sind schwenkbar an den Befestigungspunkten 36 eines Kettenträgers 37 angelenkt, jedoch ist die Gesamtlänge des Verbindungselements 33 größer als der Abstand zwischen den Befestigungspunkten 36. In der in Fig. 2 dargestellten Ruhestellung von Werkzeugträger 6 nimmt daher das Endglied 35 eine senkrechte und das Endglied 34 und das daran anschließende Glied 32 je eine abgewinkelte Stellung ein.

Der Kettenträger 37 ist mit einem Auge 38 schwenkbar auf dem Führungsrohr 10 gelagert, ist jedoch dabei so zwischen der Konsole 14 und einem mit dem Schlitten 5 verbundenen Haltearm 39 angeordnet, daß er zwar die Schwenkbewegung des Werkzeugträgers 6 von der senkrechten in die waagrechte Schnittstellung mitmacht, bei der Verschiebung des Werkzeugträgers 6 senkrecht zur Auflagefläche 2 jedoch seine Lage beibehält. Um eine ungehinderte Relativbe-wegung zwischen Werkzeugträger 6 und Ketten-träger 37 zu ermöglichen, ist im Gehäuse 25 von Werkzeugträger 6 ein Längsschlitz 40 vorgese-hen, durch den Kettenträger 37 durchgreift.

Auf dem Führungsrohr 10 ist anliegend an Auge 12 ein Federelement 41 in Form einer zylindrischen Gummifeder angeordnet, das die Aus-tauchbewegung von Werkzeugträger 6 begrenzt und sich dabei an eine Stirnfläche von Konsole 14 anlegt.

Zum Aus- und Einschalten von Getriebemotor 30 bei der Verschiebung von Werkzeugträ-ger 6 sind die beiden Endschalter 42 und 43 vorgesehen, die mit Kontaktflächen 44 und 45 von Kettenträger 37 zusammenwirken. Ein weite-rer Endschalter 46 dient zum völligen Aus-schalten von Getriebemotor 30, wenn er beim Anheben von Lagerplatte 21 auf eine Kontaktfläche 47 von Gehäuse 25 trifft.

Zur Beschreibung der Funktion der erfindungsgemäßen Vorrichtung sei von der in Fig. 2 dargestellten Ruhestellung des Werkzeugträgers 6 ausgegangen. Nach Einschalten von Getriebemotor 30 dreht sich Verschieberad 31 im Gegenuhr-zeigersinn und bewegt dabei Verschiebeele-ment 33 auf dem Kettenträger 37 von der Auflagefläche 2 weg, bis Endglied 34 eine senkrechte und Endglied 35 eine abgewinkelte Stellung einnehmen. Damit setzt die Eintauchbewegung von Werkzeugträger 6 ein, bis er die in Fig. 2 strichpunktiert gezeichnete Stellung erreicht hat und Getriebemotor 30 durch das Zusammenwirken von Kontaktfläche 44 mit Endschalter 42 ausgeschaltet wird. Während diesem Bewegungsablauf befinden sich die Führungszungen 16 und 17 im Eingriff mit den Führungsnuten 18 und 19. Der Werkzeugträger 6 ist daher gegen ein Verschwenken gesichert.

Bei der Austauchbewegung wird das Verschiebeelement 33 zunächst wieder so gegenüber dem Kettenträger 37 bewegt, daß sich das Endglied 35 in die in Fig. 2 dargestellte senkrechte Stellung bewegt und daß anschließend die Austauchbewegung des Werkzeugträgers 6 einsetzt. Nach dem Anliegen von Federelement 41 an der Konsole 14 schaltet Kontaktfläche 45 den Getriebemotor 30 über den Endschalter 43 aus.

Soll jetzt der Werkzeugträger 6 zusammen mit der Kreissäge 7 in die waagrechte Schnittstellung verschwenkt werden, so muß er mittels des Handhebels 15 gegen die Wirkung des Federelements 41 aus der in Fig. 3 strichpunktiert gezeichneten Ruhestellung in die in Fig. 3 ausgezogen gezeich-nete Schwenkstellung verschoben werden. Ob-wohl es sich bei Getriebemotor 30 um einen Motor mit selbsthemmenden Getriebe handelt und somit Verschieberad 31 starr mit den Gliedern 32 von Verschiebeelement 33 verbunden ist, erlaubt das Verschwenken von Endglied 35 des Verschiebeelements 33 eine weitere, von Hand ausgeführte Verschiebung des Werkzeugträgers 6 in die Schwenkstellung. Dabei tritt Führungszunge 17 aus der Führungsnut 19 her-aus und Werkzeugträger 6 läßt sich in die in Fig. 1 strichpunktiert dargestellte waagrechte Schnittstellung verschwenken. Dabei gelangt die andere Führungszunge 16 an die Stelle der Führungszunge 17 und greift bei einer Verschiebung des Werkzeugträgers 6 in Richtung Auflagefläche 2 in die Führungsnut 19 ein, so daß der Werkzeugträger 6 auch in dieser Stellung einwandfrei geführt ist.

Durch Verschwenken von Schaltergriff 26 läßt sich das Verschieberad 31 über die Lagerplatte 21 außer Eingriff mit dem Verschiebeelement 33 bringen, wobei Getriebemotor 30 über Endschalter 46 völlig ausgeschaltet wird. In dieser Stellung läßt sich Werkzeugträger 6 mittels des Handhebels 15 in die Eintauch- oder Aus-tauchstellung bewegen.

## Ansprüche

1. Plattensäge mit aufrechtem Gestell (1) mit einer Auflagefläche für ein plattenförmiges Werkstück (3) mit den Merkmalen :

a) einem am Gestell (1) waagrecht verschiebbaren Führungsbalken (4)

b) einem am Führungsbalken (4) in Höhenrichtung verschiebbaren Schlitten (5)

c) einem am Schlitten (5) senkrecht zur Auf-lagefläche (2) verschiebbar gelagerten Werk-zeugträger (6), der zusammen mit einer Kreissäge (7) in eine senkrechte und waagrechte Schnittstellung schwenkbar ist

d) einem motorisch über ein selbst-hemmendes Getriebe (30) antreibbaren Verschie-berad (31), das zur Verschiebung des Werkzeugträgers (6) in eine Eintauch- und Austausch-stellung mit einem Verschiebeelement (33) zusammenwirkt

gekennzeichnet durch die Merkmale :

e) das Verschiebeelement (33) ist in Ver-schieberichtung bewegbar mit dem Werkzeugträ-ger (6) verbunden

f) mit dem Werkzeugträger (6) ist mindestens eine Führungszunge (16, 17) verbunden, die am Ende der Austauchbewegung aus einer Führungsnut (18, 19) des Schlittens (5) austritt und ein Verschwenken des Werkzeugträgers (6) ermöglicht.

2. Plattensäge nach Anspruch 1, dadurch gekennzeichnet, daß zwischen Werkzeugträger (6) und Schlitten (5) ein Federelement (41) angeordnet ist und daß das Ende der Austauchbewegung von Hand gegen Wirkung des Federelements (41) erfolgt.

3. Plattensäge nach Anspruch 1 oder 2, da-durch gekennzeichnet, daß das Verschiebeele-ment (33) als auf einem Kettenträger (37) angeordnete Zahnkette ausgebildet ist, deren Gesamtlänge größer ist als der Abstand ihrer Befestigungspunkte (36) am Kettenträger (37).

4. Plattensäge nach einem der Ansprüche 1 bis 3, gekennzeichnet durch eine mit dem Verschieberad (31) zusammenwirkende Abhebeeinrichtung (23, 24), mit der das Verschieberad (31) vom Verschiebeelement (33) abhebbar ist, so daß der Werkzeugträger (6) von Hand in seine Eintauch- und Austauchstellung bewegbar ist.

## Claims

1. A panel saw with an upright frame (1) with a support surface for a panel-shaped workpiece (3), having the following characteristics :

a) a guide beam (4), horizontally shiftable on said frame (1) ;

b) a saw slide (5), vertically shiftable on said guide beam (4) ;

c) a tool carrier (6), slidably mounted on said saw slide (5) perpendicular to said support surface (2), said tool carrier (6) being able to be swivelled into a vertical and horizontal sawing position together with a circular saw (7) ;

d) a shifting wheel (31), driven via self-retarding gearing (30) by means of a motor, said shifting wheel (31) operating conjointly with a shifting element (33) to shift said tool carrier (6) into a plunge-in and plunge-out position ;

characterized by the following :

e) said shifting element (33) is connected with said tool carrier (6) in a moveable manner in the direction of shift ;

f) at least one guide tongue (16, 17) is connected with said tool carrier (6), said guide tongue (16, 17) egressing from a guide slot (18, 19) in said saw slide (5) at the end of the plunge-out motion, thereby permitting said tool carrier (6) to swivel.

2. The panel saw set forth in claim 1, characterized in that a spring element (41) is arranged between tool carrier (6) and saw slide (5) and in that termination of the plunge-out motion is performed manually, against the effect of said spring element (41).

3. The panel saw set forth in claim 1 or 2, characterized in that said shifting element (33) is designed as a toothed chain, arranged on a chain carrier (37), the total length of said toothed chain being greater than the distance between its mounting points (36) on said chain carrier (37).

4. The panel saw set forth in any of claims 1 to 3, characterized by lift-off means (23, 24), operating conjointly with said shifting wheel (31), by means of which said shifting wheel (31) can be lifted off said shifting element (33), thereby permitting said tool carrier (6) to be moved manually into its plunge-in and plunge-out position.

## Revendications

1. Scie à panneaux avec bâti vertical (1) comportant une surface d'appui destinée à une pièce à travailler en forme de panneau (3), aux caractéristiques suivantes :

a) une barre de guidage (4) déplaçable horizontalement sur le bâti (1)

b) un traînard (5) déplaçable en hauteur sur la barre de guidage (4)

c) un porte-outil (6) déplaçable monté sur le traînard (5) avec possibilité de déplacement perpendiculaire à la surface d'appui (2), porte-outil (6) qui, avec une scie circulaire (7), peut basculer en positions de coupe verticale et horizontale

d) une roue de déplacement (31) entraînée par moteur, par l'intermédiaire d'un engrenage autobloquant (30), roue qui, pour le déplacement du porte-outil (6) en positions de plongée et de relevage, opère conjointement avec un élément de déplacement (33)

se distinguant par ce qui suit :

e) l'élément de déplacement (33) peut être mu dans le sens du déplacement en combinaison avec le porte-outil (6)

f) une languette de guidage (16, 17), au minimum, est reliée au porte-outil (6), languette qui, au terme du mouvement de relevage, sort d'une rainure de guidage (18, 19) du traînard (5) et permet un basculement du porte-outil (6).

2. Scie à panneaux d'après la revendication 1, caractérisée par le fait qu'un élément à ressort (41) est disposé entre le porte-outil (6) et le traînard (5) et que la fin du mouvement de relevage est assurée à la main par action opposée à celle de l'élément à ressort (41).

3. Scie à panneaux d'après la revendication 1 ou 2, caractérisée par le fait que l'élément de déplacement (33) est conçu sous forme de chaîne dentée disposée sur un support de chaîne (37), chaîne dont la longueur totale est supérieure à l'écart entre ses points de fixation (36) sur le support de chaîne (37).

4. Scie à panneaux d'après l'une des revendications 1 à 3, caractérisée par un dispositif de relevage (23, 24) opérant conjointement avec la roue de déplacement (31), dispositif grâce auquel la roue de déplacement (31) peut être éloignée de l'élément de déplacement (33), de telle sorte que le porte-outil (6) peut être déplacé à la main dans ses positions de plongée et de relevage.

# FIG. 1

FIG. 2

FIG. 3